# EUROPEAN PATENT APPLICATION

(11) **EP 4 311 227 A1**
(43) Date of publication of application: **24.01.2024**
(21) Application number: 23184754.2
(22) Date of filing: 11.07.2023
(51) Int. Cl.: H04N 7/15

(54) **ELECTRONIC DEVICE AND METHOD FOR REMOTE VIDEO CONFERENCE**

(30) Priority: 19.07.2022 CN 202210848739
(71) Applicant: Optoma Coporation, New Taipei City 231633 (TW)
(72) Inventor: CHEN, HSING-YU, New Taipei City 231633 (TW); WU, LU-HENG, New Taipei City 231633 (TW)
(74) Representative: Ter Meer Steinmeister & Partner

(57) **Abstract**

An electronic device and a method for video conference are provided. The electronic device includes a transceiver, a storage medium, and a processor. The storage medium stores a plurality of modules. The processor is coupled to the storage medium and the transceiver, and is configured to access and execute the plurality of modules. The plurality of modules include a receiving terminal application and a virtual device. The receiving terminal application receives at least one first video data through the transceiver, and synthesizes the at least one first video data into synthesized video data. The virtual device converts the synthesized video data into formatted video data, and outputs the formatted video data.

## Description

### CROSS-REFERENCE TO RELATED APPLICATION

This application claims the priority benefit of Chinese application no. 202210848739.2, filed on July 19, 2022. The entirety of the above-mentioned patent application is hereby incorporated by reference herein and made a part of this specification.

### BACKGROUND

### Technical Field

The disclosure relates to a video technology. In particular, the disclosure relates to an electronic device and a method for a video conference.

### Description of Related Art

During the past, a conference was typically in a form of a plurality of personnel people meeting in the same conference room. With the evolution of the digital age and the alterations and changes in the epidemic, demands for video conferences has increased, and the form has turned into a mixed videoconferencing environment of a conference in a short distance space with a video conference in a long distance, no longer limited to meeting in the same spatial environment as during the past. Therefore, collaboration may be one of the links in a conference.

During a remote video conference, a plurality of personnel participating in the conference conduct the video conference by using personal mobile devices (e.g., a smart cellular phone or a notebook computer) or smart devices in the conference room (e.g., a smart cellular phone, a notebook computer, a desktop computer, a projector, a smart display screen, or specific electronic equipment) with a video capturing device on the personal device or on the smart device (e.g., a built-in camera of the mobile device or an external camera) and video software. For example, a plurality of personnel are in the same conference room, each using a personal device or a smart device to conduct the video conference with remote personnel; or a plurality of personnel are in the same conference room, placing a device (a cellular phone or a notebook) at a position (e.g., placing a notebook at the frontmost side of the conference room) where a video capturing device can capture each person, and using a built-in camera of the smart device to conduct the video conference with remote personnel; or a plurality of personnel are in the same conference room, using an external lens of a smart device (a projector or a smart large-sized screen) to conduct the video conference with remote personnel.

There are issues in the above convention. For example, since each person in the conference room turns on videoconferencing software, the microphone of the device of only one person can be turned on at one time to prevent echoes in the same conference room, and the others are required to first turn off the microphones of their devices. When another person needs to speak, the another person is required to ask the original speaking person to turn off the microphone and then turn on the microphone of the device of the another person. In addition, even though a plurality of people are in the same conference room, each person is required to turn on the videoconferencing software at the same time, which occupies a great amount of network bandwidth, resulting in adversely affected remote videoconferencing experiences. For another example, the capture range of the camera lens is limited, and it is unlikely to capture all participants in the same conference room. If the remote video conferencing device is placed at the frontmost side of the conference room, operation by the personnel may be inconvenient and sound reception of the microphone may also be affected. When a certain person needs to speak, the person may be required to move to a place close to the device. Furthermore, since the projector or the smart large-sized screen is required to be externally connected with a smart device having a camera lens, it is required to purchase a camera lens and a microphone, which increases additional costs.

Therefore, how to design a device that facilitates remote personnel or local personnel to participate in a video conference without increasing additional costs is one of the technical issues in the related fields.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The disclosure provides an electronic device and a method for a video conference, convenient for personnel to access a video capturing device of a remote electronic device and participate in a video conference through electronic devices of the personnel, such as a smart device, so as to increase convenience in the video conference.

The object of the present invention is achieved by the features of the independent claims. Preferred embodiments are given in the dependent claims.

According to an embodiment of the disclosure, an electronic device for a video conference includes a transceiver, a storage medium, and a processor. The storage medium stores a plurality of modules. The processor is coupled to the storage medium and the transceiver, and is configured to access and execute the plurality of modules. The plurality of modules include a receiving terminal application and a virtual device. The receiving terminal application receives at least one first video data through the transceiver, and synthesizes the at least one first video data into synthesized video data. The virtual device converts the synthesized video data into formatted video data, and outputs the formatted video data.

In one or more embodiments of the disclosure, the electronic device may further include at least one video capturing device.

In one or embodiments, the at least one video capturing device may be coupled to the transceiver.

In one or more embodiments, the receiving terminal application may obtain at least one second video data from the at least one video capturing device, and/or may synthesizes the at least one first video data and the at least one second video data into the synthesized video data.

In one or more embodiments of the disclosure, the electronic device may further include at least one video capturing device.

In one or more embodiments, the at least one video capturing device may be coupled to the transceiver.

In one or more embodiments, the plurality of module may further include a transmitting terminal application.

In one or more embodiments, the transmitting terminal application may obtain the first video data from the at least one video capturing device, and/or may output the first video data through the transceiver.

In one or more embodiments, the plurality of modules may further includes a user interface.

In one or more embodiments, the user interface may receive a user command through the transceiver.

In one or more embodiments, the user interface may enable one of the receiving terminal application and the transmitting terminal application according to the user command.

In one or more embodiments, the plurality of modules may further includes a user interface.

In one or more embodiments, the user interface may receive a user command through the transceiver, and may disable the transmitting terminal application and may enable the receiving terminal application according to the user command.

In one or more embodiments, the user interface may receive a user command through the transceiver.

In one or more embodiments, the receiving terminal application may select selected video data from the at least one first video data and the at least one second video data according to the user command, and/or may generate the synthesized video data according to the selected video data.

In one or more embodiments, the electronic device may further include a display.

In one or more embodiments, the display may be coupled to the processor.

In one or more embodiments, the user interface may display at least one data source corresponding to the at least one first video data and the at least one second video data through the display.

In one or more embodiments, the user command may for selecting a selected data source corresponding to the selected video data from the at least one data source.

In one or more embodiments, the plurality of modules may further include a videoconferencing application.

In one or more embodiments, the videoconferencing application may be communicatively connected to a remote communication device through the transceiver.

In one or more embodiments, the videoconferencing application may receive the formatted video data from the virtual device, and/or may perform a video conference between the electronic device and the remote communication device according to the formatted video data.

In one or more embodiments of the disclosure, the receiving terminal application may access a wireless local area network through the transceiver to detect at least one data source in the wireless local area network.

In one or more embodiments, the receiving terminal application may receive the at least one first video data from the at least one data source in response to the at least one data source being detected.

In one or more embodiments, of the disclosure, the transmitting terminal application may open an access right to the first video data to an external electronic device in response to the transmitting terminal application being enabled.

According to an embodiment of the disclosure, a method for a video conference includes the following. At least one first video data is received, and the at least one first video data is synthesized into synthesized video data. The synthesized video data is converted into formatted video data. The formatted video data is output.

Based on the foregoing, in the electronic device for a video conference according to the embodiments of the disclosure, the mobile device held by local personnel participating in the conference may be converted into the video capturing device of the electronic device without increasing additional costs. The electronic device may convert the relevant video data of all the local personnel participating in the conference into synthesized video data for communication with remote personnel through the synthesized video data, accordingly reducing the network bandwidth resources required to be consumed by the local personnel.

Other objectives, features and advantages of the present invention will be further understood from the further technological features disclosed by the embodiments of the present invention wherein there are shown and described preferred embodiments of this invention, simply by way of illustration of modes best suited to carry out the invention.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a functional block diagram of an electronic device for a video conference according to an embodiment of the disclosure.
FIG. 2 is a functional block diagram of a transmitting terminal application and a receiving terminal application according to an embodiment of the disclosure.
FIG. 3 is a flowchart of a method for a video conference according to an embodiment of the disclosure.

### DESCRIPTION OF THE EMBODIMENTS

It is to be understood that other embodiment may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

To facilitate understanding of the disclosure, the following embodiments are provided to serve as examples that the disclosure can reliably be implemented accordingly. In addition, wherever possible, elements/members/steps labeled using the same reference numerals in the drawings and the embodiments refer to the same or similar parts.

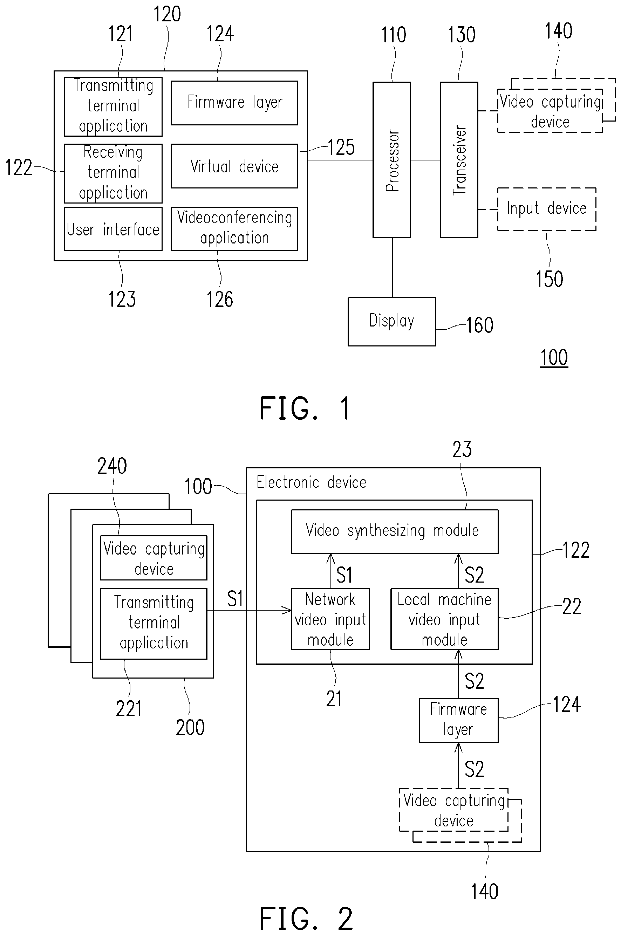

FIG. 1 is a functional block diagram of an electronic device 100 for a video conference according to an embodiment of the disclosure. The electronic device 100 is a smart cellular phone or a notebook computer, for example. The electronic device 100 includes a processor 110, a storage medium 120, a transceiver 130, and a display 160. In an embodiment, the electronic device 100 further includes one or more video capturing devices 140 and an input device 150. The processor 110 is coupled to the storage medium 120, the transceiver 130, and the display 160. The transceiver 130 may be directly or indirectly coupled to the (one or more) video capturing devices 140 and the input device 150 through a physical wire or wireless connection. The transceiver 130 is an interface for transmitting and receiving messages, for example, WIFI or Bluetooth. In an embodiment, the electronic device 100 may be an independent and movable device and may be placed at any appropriate position in a conference space. In another embodiment, the electronic device 100 may also be integrated with computer equipment or projecting equipment, which is not limited by the disclosure.

The processor 110 may include a central processing unit (CPU) with image data analysis and processing functions, or any other programmable general-purpose or special-purpose microprocessor, image processing unit (IPU), graphics processing unit (GPU), digital signal processor (DSP), application specific integrated circuit (ASIC), programmable logic device (PLD), or other similar computing circuits or a combination thereof.

The storage medium 120 is, for example, any type of fixed or removable random access memory (RAM), read-only memory (ROM), flash memory, hard disk drive (HDD), solid state drive (SSD), or similar elements or a combination thereof, for storing a plurality of modules or various applications executable by the processor 110. In this embodiment, the storage medium 120 may store a plurality of modules including, for example, a transmitting terminal application 121, a receiving terminal application 122, a user interface 123, a firmware layer 124, a virtual device 125, and a videoconferencing application 126, functions of which will be described later.

The transceiver 130 transmits and receives signals wirelessly or by wire. The transceiver 130 may also perform operations such as low noise amplification, impedance matching, frequency mixing, frequency up-conversion or down-conversion, filtering, amplification, and the like.

The video capturing device 140 may include at least one of an image capturing device (e.g., a camera) for capturing images and a sound capturing device (e.g., a microphone) for capturing sounds. The image capturing device may include image sensors such as a complementary metal oxide semiconductor (CMOS) sensor or a charge coupled device (CCD) sensor. The sound capturing device is a microphone, such as a dynamic microphone, a condenser microphone, an electret condenser microphone, a micro-electrical mechanical system (MEMS) microphone, a ribbon microphone, a carbon microphone, or the like.

The input device 150 is configured to receive an operation from a user to generate a command. The input device 150 is, for example, a touch-sensitive display screen, a keyboard, or a mouse, and the disclosure is not limited thereto.

The display 160 may be a liquid-crystal display (LCD), a light-emitting diode (LED) display, a vacuum fluorescent display (VFD), a plasma display panel (PDP), an organic light-emitting diode (OLED) display, or a field-emission display (FED). In an embodiment, the display 160 may be replaced by a projector, and the disclosure is not limited thereto.

A video conference may be conducted with a plurality of electronic devices 100. Local participants in the conference may operate the electronic devices 100 as transmitting terminals to participate in the video conference. The electronic device 100 as a receiving terminal may integrate video data from the local transmitting terminals to conduct the video conference with remote participants in the conference.

The user interface 123 of the electronic device 100 may receive a user command through the transceiver 130 and enable the transmitting terminal application 121 or the receiving terminal application 122 according to the user command. In an embodiment, the electronic device 100 is preset to a transmitting terminal. In other words, when the user enables the relevant functions of the video conference, the electronic device 100 may directly enable the transmitting terminal application 121 as a transmitting terminal. If the user intends to switch the electronic device 100 to a receiving terminal, the user may operate the input device 150 to transmit the user command to the user interface 123. The user interface 123 may disable the transmitting terminal application 121 and enable the receiving terminal application 122 according to the user command, accordingly switching the electronic device 100 from a transmitting terminal to a receiving terminal.

A local participant in the conference may operate the electronic device 100 to enable the transmitting terminal application 121 to switch the electronic device 100 to a transmitting terminal. The transmitting terminal application 121 may obtain video data from the video capturing device 140 and output the video data through the transceiver 130.

FIG. 2 is a functional block diagram of a transmitting terminal application 221 and the receiving terminal application 122 according to an embodiment of the disclosure. An electronic device 200 has the same function as the electronic device 100. The transmitting terminal application 221 of the electronic device 200 as a transmitting terminal may obtain first video data S 1 through a video capturing device 240 of the electronic device 200 as a transmitting terminal, and output the first video data S1 to the receiving terminal application 122 of the electronic device 100.

In an embodiment, in response to being enabled, the transmitting terminal application 121 (or the transmitting terminal application 221) may open an access right to video data to the external electronic device 200. Taking FIG. 2 as an example, the transmitting terminal application 221 of the electronic device 200 may open an access right to the first video data S 1 to the electronic device 100 in response to the transmitting terminal application 221 being enabled. The receiving terminal application 122 of the electronic device 100 may obtain the first video data S 1 from the electronic device 200 and in response to the access right to the first video data S 1 being opened. For example, by operating the electronic device 100 to send a request to obtain an access right to the electronic device 200, a user may obtain an access right to the video capturing device 240 of the electronic device 200 or an access right to other applications. If agreed to by the electronic device 200, the electronic device 100 may access the first video data S1 of the electronic device 200.

A user may operate the electronic device 100 to enable the receiving terminal application 122 to switch the electronic device 100 to a receiving terminal. The receiving terminal application 122 may receive video data from other remote communication devices (electronic devices) through the transceiver 130. For example, the receiving terminal application 122 may receive the first video data S1 from the electronic device 200 through the transceiver 130. A network video input module 21 of the receiving terminal application 122 may receive the first video data S1, and transmit the first video data S1 to a video synthesizing module 23 of the receiving terminal application 122.

In addition, the electronic device 100 is coupled to one or more video capturing devices 140. A local machine video input module 22 of the receiving terminal application 122 may communicate with the one or more video capturing devices 140 by using the firmware layer 124 corresponding to the video capturing devices, accordingly obtaining one or a plurality of second video data S2 from the one or more video capturing devices 140 (e.g., video data from the local machine). The local machine video input module 22 may transmit the second video data S2 to the video synthesizing module 23 in the receiving terminal application 122. The video synthesizing module 23 synthesizes the first video data S 1 and/or the second video data S2 into synthesized video data. The first video data S 1 (or the second video data S2) may contain relevant information such as video captured by a camera or a microphone or a shared desktop. The synthesized video data may contain video information related to a plurality of different users. For example, assuming that the video synthesizing module 23 receives the first video data S1 associated with a user A and the second video data S2 associated with a user B, then the video synthesizing module 23 may generate synthesized video data related to video information of the user A and the user B according to the first video data S1 and the second video data S2.

In an embodiment, the transceiver 130 is an interface for transmitting and receiving messages, for example, WIFI or Bluetooth. The receiving terminal application 122 accesses a wireless local area network at the local end through the transceiver 130 to detect a data source in the wireless local area network. The data source is, for example, the electronic device 200 as a transmitting terminal. The receiving terminal application 122 receives video data from the data source in response to the data source being detected. In other words, after being turned on, the receiving terminal application 122 may automatically detect an external electronic device that may serve as a source of video data to obtain the first video data S1 from the detected external electronic device.

In an embodiment, the processor 110 may generate the virtual device 125. The virtual device 125 may convert the synthesized video data into formatted video data that may be supported by the videoconferencing application 126, and output the formatted video data to the videoconferencing application 126. The virtual device 125 may be identified as a single device by an operating system. For example, if the electronic device 100 runs a Windows operating system, the administrator of the Windows operating system may identify the virtual device 125 as a device. After the videoconferencing application 126 is enabled, the videoconferencing application 126 may treat the virtual device 125 as a single device, and obtain the formatted video data from the virtual device 125.

In an embodiment, the user interface 123 may display options related to data sources through the display 160 for a user to select from. For example, a source of video data (e.g., the first video data S1 or the second video data S2) of the electronic device 100 may include one or more electronic devices 200 or one or more video capturing devices 140. The user interface 123 may display the electronic devices 200 or the video capturing devices 140 through the display 160 as data sources for the user to select from. The user may operate the input device 150 to select a selected data source from the data sources. Video data that is transmitted by the selected data source to the receiving terminal application 122 is selected video data. The synthesized video data generated by the video synthesizing module 23 may be associated with the selected video data alone. If a source of video data is not selected by the user, the synthesized video data may not contain relevant information of the video data.

The videoconferencing application 126 is communicatively connected to a remote communication device through the transceiver 130. The videoconferencing application 126 receives the formatted video data from the virtual device 125, and conducts a video conference between the electronic device 100 and other electronic devices 100 as transmitting terminals according to the formatted video data.

In an embodiment, the electronic device 100 as a receiving terminal and one or more electronic devices 100 (or electronic devices 200) as transmitting terminals are located in the same network domain.

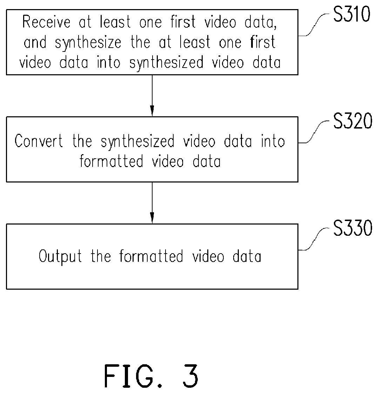

FIG. 3 is a flowchart of a method for a video conference according to an embodiment of the disclosure. The method may be implemented by the electronic device 100 as shown in FIG. 3. In step S310, the electronic device 100 receives at least one first video data, and synthesizes the at least one first video data into synthesized video data. In step S320, the electronic device 100 converts the synthesized video data into formatted video data. In step S330, the electronic device 100 outputs the formatted video data.

In summary of the foregoing, in the electronic device for a video conference and the method for a video conference according to the embodiments of the disclosure, a user may flexibly select to present the content of images of which of the video devices. In addition, through the user interface, a user may freely select and adjust whether transmission or reception is to be performed by the electronic device. Furthermore, the user interface may allow a user to select some selected video sources from a plurality of video sources depending on the requirements, and integrate the selected video sources into one to be output. According to the embodiments of the disclosure, participants in a conference may participate in video conferences through mobile devices of the participants, accordingly reducing the cost of purchasing videoconferencing devices. Moreover, the electronic device as a receiving terminal may serve as a single window for local participants and remote participants in a video conference, reducing the network bandwidth resources required to be consumed by conducting the video conference.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An electronic device for a video conference comprising:
a transceiver (130);
a storage medium (120) for storing a plurality of modules (121, 122, 123, 124, 125, 126); and
a processor (110) coupled to the storage medium (120) and the transceiver (130), and being configured to access and execute the plurality of modules (121, 122, 123, 124, 125, 126), wherein the plurality of modules (121, 122, 123, 124, 125, 126) comprises:
a receiving terminal application (122) receiving at least one first video data (S 1) through the transceiver (130), and synthesizing the at least one first video data (S1) into synthesized video data; and
a virtual device (125) converting the synthesized video data into formatted video data, and output the formatted video data.

2. The electronic device according to claim 1, further comprising at least one video capturing device (140) coupled to the transceiver (130).

3. The electronic device according to claim 2, wherein the receiving terminal application (122) is configured to obtain at least one second video data (S2) from the at least one video capturing device (140), and is configured to synthesize the at least one first video data (S 1) and the at least one second video data (S2) into the synthesized video data.

4. The electronic device according to any one of the preceding claims, wherein the plurality of modules (121, 122, 123, 124, 125, 126) further comprises a transmitting terminal application (121) configured to obtain the first video data (S1) from the at least one video capturing device (140), and configured to output the first video data (S1) through the transceiver (130).

5. The electronic device according to any one of the preceding claims, wherein the plurality of modules (121, 122, 123, 124, 125, 126) further comprises a user interface (123) configured to receive a user command through the transceiver (130).

6. The electronic device according to claim 5, wherein the user interface (123) is configured to enable one of the receiving terminal application (122) and the transmitting terminal application (121) according to the user command or the user interface (123) is configured to disable the transmitting terminal application (121) and to enable the receiving terminal application (122) according to the user command.

7. The electronic device according to any one of the preceding claims, wherein the receiving terminal application (122) is configured to select selected video data from the at least one first video data (S1) and the at least one second video data (S2) according to a user command, and to generate the synthesized video data according to the selected video data.

8. The electronic device according to any one of the preceding claims, further comprising a display (160) coupled to the processor (110).

9. The electronic device according to claim 8, wherein the user interface (123) is configured to display at least one data source corresponding to the at least one first video data (S1) and the at least one second video data (S2) through the display (160).

10. The electronic device according to any one of the claims 5 to 9, wherein the user command is for selecting a selected data source corresponding to the selected video data from the at least one data source.

11. The electronic device according to any one of the preceding claims, wherein the plurality of modules (121, 122, 123, 124, 125, 126) further comprises a videoconferencing application (126) communicatively connected to a remote communication device through the transceiver (130).

12. The electronic device according to claim 11, wherein the videoconferencing application (126) is configured to receive the formatted video data from the virtual device, and to perform a video conference between the electronic device (100) and the remote communication device according to the formatted video data.

13. The electronic device according to any one of the preceding claims, wherein the receiving terminal application (122) is configured to access a wireless local area network through the transceiver (130) to detect at least one data source in the wireless local area network, and
the receiving terminal application (122) is configured to receive the at least one first video data (S1) from the at least one data source in response to the at least one data source being detected.

14. The electronic device according to any one of the preceding claims, wherein the transmitting terminal application (121) is configured to open an access right to the first video data (S1) to an external electronic device in response to the transmitting terminal application (121) being enabled.

15. A method for a video conference comprising:
receiving at least one first video data (S 1), and synthesizing the at least one first video data (S1) into synthesized video data;
converting the synthesized video data into formatted video data; and
outputting the formatted video data.
